# EUROPÄISCHE PATENTSCHRIFT

(11) **EP 2 403 766 B1**
(45) Veröffentlichungstag und Bekanntmachung des Hinweises auf die Patenterteilung: **06.11.2013**
(21) Anmeldenummer: 10709070.6
(22) Anmeldetag: 23.02.2010
(51) Int. Cl.: B65D 19/00, B65D 19/40

(54) **MODULARE MEHRWEGPALETTE**
MODULAR PALLET
PALETTE MODULAIRE

(30) Priorität: 02.03.2009 CH 301092009
(43) Veröffentlichungstag der Anmeldung: 11.01.2012
(73) Patentinhaber: Konsortium "Two In One", 4450 Sissach (CH)
(72) Erfinder: GYSIN, Pascal, 4450 Sissach (CH); WEISS, Bruno, 4443 Wittinsburg (CH); HOFER, Walter, 4442 Diepflingen (CH)
(74) Vertreter: Fleck, Hermann-Josef
(86) Internationale Anmeldenummer: PCT/IB2010/050773
(87) Internationale Veröffentlichungsnummer: WO 2010/100580

(56) Entgegenhaltungen:
- EP-A1- 1 772 390
- DE-U1- 8 428 379
- DE-U1-202008 010 200
- GB-A- 2 440 802

## Beschreibung

Die vorliegende Erfindung betrifft eine modulare Mehrwegpalette gemäss Oberbegriff im Patentanspruch 1.

Eine Mehrwegpalette dieser Art ist in der GB 2 440 802 A angegeben. Weitere Mehrwegpaletten sind in der EP 1 772 390 A1 und der DE 20 2008 010 200 U1 gezeigt.

Um den Transport zwischen Hersteller und Händler, aber auch für die Lagerung von Waren aller Art werden Norm-Paletten, sogenannte Euro-Paletten verwendet, welche ein Modulsystem begründen. Eine Vielzahl solcher Paletten aus Holz sind frei im Umlauf. Der offensichtliche Vorteil dieser auf die Masse 120x80cm standardisierten Paletten mit einer Höhe von ca. 14.5cm ist die Normierung. Alle Geräte für Transport und Umlad und alle Lagerhäuser sind auf diese Standardmasse eingerichtet. Solche Norm-Mass-Paletten werden nicht nur aus Holz sondern auch aus Metall, Kunststoff, Karton und andern Materialien angeboten und verwendet.

Die Höhe von ca. 14.5cm ist ein gängiger Standard für Normpaletten, um bei der Lagerung in Hochlagern aber auch beim manuellen Umlad die Sicherheit zu haben, dass die Gabeln der Stapler genügend Höhe vorfinden, um sicher unter die tragende Plattform zu gelangen. Diese Höhe wird dadurch gewährleistet, dass Holmen oder Füsse zwischen Plattform und Boden die notwendige Distanz gewährleisten.

Standardpaletten bestehen in der Regel aus einer Plattform, die um die Höhe von 14.5cm zu erreichen mit Holmen oder Füssen versehen ist. Holme und/oder Füsse bieten Zwischenräume, in denen die Gabeln eines Staplers eingreifen können. Diese Zwischenräume müssen aus praktischen Gründen ein gewisses Mindestmass aufweisen. Wenn z.B. in einem Hochregallager auf 12m Höhe die Gabeln des Verteilgerätes sicher eingreifen sollen, muss dafür eine gewisse Toleranz vorhanden sein. Für das Handling, also Umlad und Einlagerung muss die Palette deshalb eine Minimalhöhe aufweisen.

Die relativ grosse Höhe der Paletten, welche für die Hochlagerung und für den Umlad vom Standpunkt der Arbeitssicherheit gefordert ist, erweist sich für den Transport nachteilig, weil sie relativ viel Volumen beanspruchen und das immer wieder hin und her zu transportierende Eigengewicht beträchtlich ist. Leicht gebaute Paletten sind für die mehrfache Verwendung im groben und unsorgfältigen Einsatz von Transport und Umlad vielfach nicht stabil genug. Man behilft sich deshalb für den Transport mit speziellen Transportgebinden die leicht sind und weniger Volumen in Anspruch nehmen. Dies hat den grossen Nachteil, dass die Ware zwischen Transport und Lagerung vom Transportgebinde auf die Standardpalette umgeladen werden muss. Der Aufwand für diese Umladungen ist beträchtlich und es wird deshalb nach Möglichkeiten gesucht, diesen Umlad zu vermeiden.

Ein weiteres Problem der preiswerten und millionenfach verwendeten Holzpaletten ist der Abfall, welchen man gerne eliminieren würde. Die Verwendung der Vielzahl standardisierter Paletten hat sich bewährt, weil sie von jedem benutzt werden können und daher nicht unbedingt zum ersten Verwender zurück transportiert werden müssen. Sinnvoll wäre jedoch der Einsatz eines Materials das wieder verwendet werden kann und nicht verbrennt oder entsorgt werden muss. Man produziert schon heute Normpaletten aus wiederverwendeten und rezyklierbaren faserverstärkten Kunststoffen. Diese sind jedoch zu teuer, als dass sie die verwendeten von allen benutzten Holzpaletten ersetzen könnten. Wenn man teure Kunststoffpaletten herstellen will, können diese nur in einem kontrollierten und überwachten Bereich z.B. einer Firma oder einer Interessegemeinschaft eingesetzt werden. Wünschenswert ist es ferner, dass das Material, das für solche Paletten verwendet wird, wieder für die Herstellung neuer Paletten verwendet werden kann.

Die vorliegende Erfindung stellt sich nunmehr die Aufgabe eine modulare Mehrwegpalette der eingangs genannten Art derart zu verbessern, dass dieselbe für den Transport leicht ist, wenig Volumen aufweist und für die Verwendung im Lagerhaus den Anforderungen für sicheres Handling genügt. Sie muss gleichzeitig mit den für die Normpaletten vorhandenen Transport- und Umlad-Einrichtungen kompatibel sein und soll vielfach verwendet werden können.

Diese Aufgabe löst eine modulare Mehrwegpalette mit den Merkmalen des Patentanspruches 1, deren Vorteile in der nachfolgenden Beschreibung erläutert sind.

In der Zeichnung zeigt:
- Fig 1: Funktionssystem klein
- Fig 2: Perspektivische Ansicht der Mechanik
- Fig 3: Perspektivische Ansicht modulare Palette
- Fig 4: Funktionssystem gross

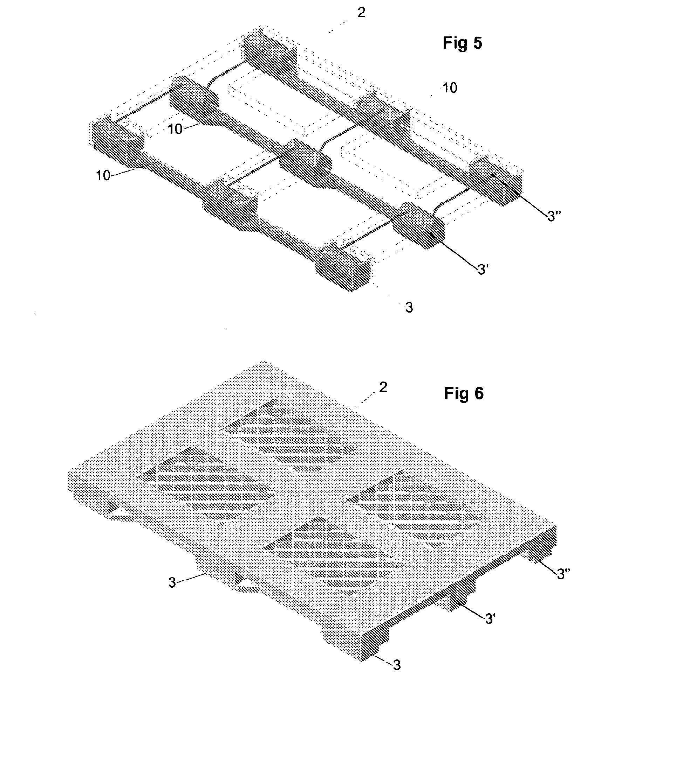

- Fig 5: Perspektivische Ansicht der Mechanik
- Fig 6: Perspektivische Ansicht modulare Palette

Die Figuren stellen mögliche Ausführungsbeispiele dar, welche in der nachfolgenden Beschreibung erläutert werden.

Heute im Einsatz stehende Norm-Paletten weisen in der Regel drei Holmen 3 auf, können aber z.B. auch neun Füsse aufweisen. Holme oder Füsse sind mit einer Plattform, auf die Ware geladen wird, fest verbunden. Sie dienen als tragende Elemente und/oder der Stabilität der Palette, bilden aber auch einen Hohlraum zwischen Boden und Plattform. Dieser Hohlraum ist wesentlich, um mit den meist gabelförmigen Vorrichtungen von Staplern und Lagerhaus-Automaten die beladenen oder leeren Paletten unter der Plattform fassen und aufnehmen, sowie über Rollenbahnen, Kettenbahnen, Lifte, also über alle Abfertigungs- und Transporteinrichtungen sicher bewegen zu können.

Die vorliegende Erfindung stellt eine modulare Mehrwegpalette vor, welche eine selbsttragende Plattform 2 aufweist, die mit höhenverstellbaren Holmen 3 ausgerüstet ist. Eine alternative Ausrüstung mit einzeln höhenverstellbaren Füssen, welche von den Ansprüchen nicht umfasst ist, wird nachfolgend in dieser Schrift mit beschrieben. Um die Funktion der Palette sicher zu stellen, müssen alle Füsse oder Holme 3 zwischen Boden und Oberkante der Plattform 2 immer dieselbe Distanz aufweisen und gewährleisten. Für höhenverstellbare Füsse oder Holmen 3 heisst das, dass die Höhenverstellung zwangsweise auf alle neun Füsse oder drei Holmen 3 wirken muss. Feste Holmen oder Füsse gewährleisten dies bei einer intakten Palette immer. Für in der Höhe verstellbare Paletten muss eine sicher funktionierende Vorrichtung dafür sorgen, dass alle drei Holme 3 oder alle neun Füsse immer parallel auf derselben Höhe befinden.

Die vorliegende Erfindung sieht vor, dass höhenverstellbare Holme 3 mittels entsprechenden Mitteln in der Höhe immer parallel und im Gleichschritt verstellt werden. Dies ermöglichen hydraulisch oder pneumatisch verbundene Kolben/Zylinder Systeme. Auch mechanisch verbundene Systeme mit Spindeln oder Excenter. Die Verbindung von Spindeln oder Excenter kann auch über elektrische Mittel mit Stellmotoren und Endschaltern gewährleistet werden. Der gewählten Technik entsprechend werden die geeigneten Mittel eingesetzt, um gleiche Höhe aller Holme oder Füsse zu garantieren.

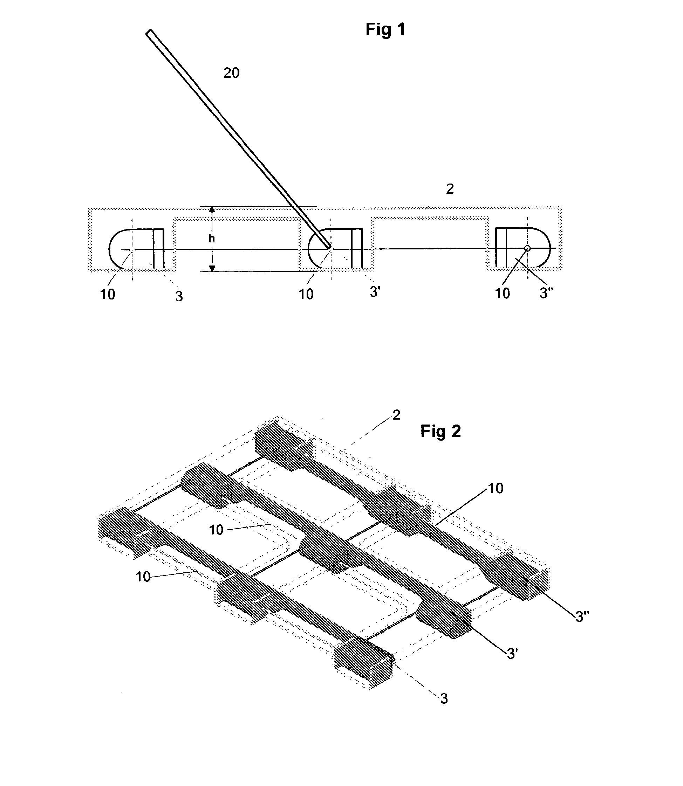

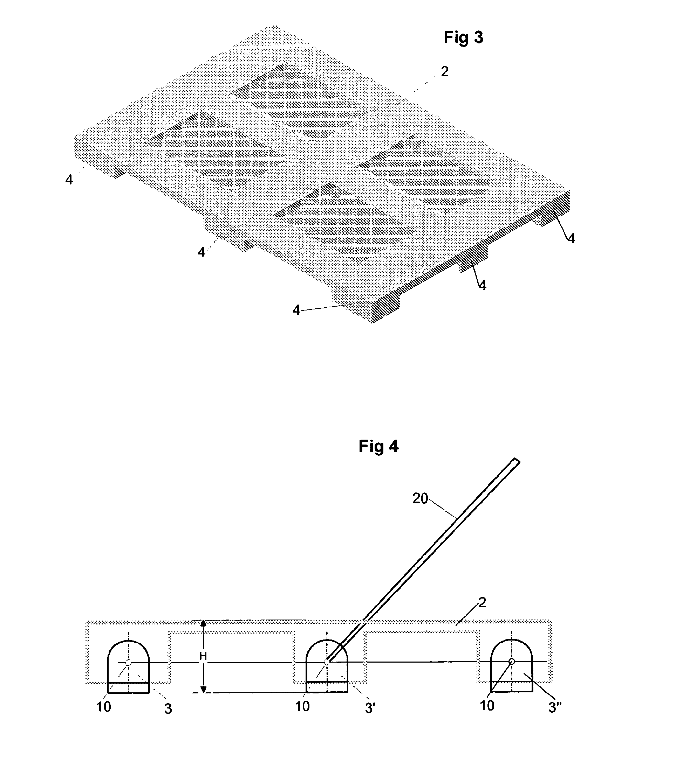

Im vorliegenden Beispiel hat man sich auf eine möglichst kostengünstige und einfache mechanische Vorrichtung konzentriert. Wie in Fig 1 bis Fig 3 gezeigt befinden sich die Holme 3 innerhalb der Konturen, die durch die Plattform 2 gegeben sind. In dieser Stellung ist die kleine Höhe h durch die Plattform 2 gegeben, d.h. die Holme 3 sind innerhalb der von der Plattform 2 vorgegebenen Plattformfüssen 4 (Fig3). In dieser Stellung der Holme ist die Palette auf der für den Transport gedachten praktizierbaren und minimalen Höhe von z.B. 4-7.5cm. Sie nimmt also relativ wenig Höhe in Anspruch, kann aber dennoch durch Stapler vom LKW abgenommen werden.

Die Holme 3 sind mit der Plattform 2 durch Achsen 10 drehbar verbunden. Die drei Holme 3,3' und 3" (Fig 2) sind miteinander durch Riemen, Ketten oder Gestänge in der Art verbunden, dass alle drei gezwungenermassen immer in derselben Stellung sind. Um Unfälle zu vermeiden, sind die Holme jeweils in den beiden Endstellungen automatisch durch entsprechende Vorrichtungen gesichert. Diese Sicherung wird gelöst, bevor sie mit einer Vorrichtung, in Fig 1 und Fig 4 als Handhebel 20 dargestellt, in die andere Endstellung gebracht und dort wieder automatisch gesichert wird.

Die Bedienung der Verstellvorrichtung befindet sich z.B. an beiden Längsseiten des mittleren Holmes 3', kann sich aber je nach bedarf irgendwo an der Palette befinden. Sie kann z.B. wie im gezeigten Beispiel durch einen Handhebel 20 erfolgen. Im professionellen Einsatz ist jedoch vorgesehen, dass an den Gabelstaplern mit denen der Umlad z.B. vom LKW ins Lagerhaus und umgekehrt vorgenommen wird, eine Vorrichtung angebracht ist, die durch das Bedienungspersonal vom Stapler aus initiiert werden kann. Vorteilhafterweise erfolgt dies durch eine Zielsteuerung, welche die Sicherung z.B. in der Stellung "tief" nach dem Transport zuerst löst, die Holmen 3 in die neue Stellung bringt und sie dort in der Stellung "hoch" gleich wieder sichert. Diese erneute Sicherung der Verriegelung in der neuen Stellung muss zwangsweise erfolgen, man spricht von einer Zwangsverriegelung. Es ist z.B. vorstellbar, dass mit dem Verbinden des Handhebels 20 oder der am Stapler vorgesehenen Vorrichtung die Zwangsverriegelung automatisch gelöst wird. Nach der Drehung die Vorrichtung aber nur entfernt werden kann, wenn die Sicherung in der neuen Stellung erfolgt ist.

## Patentansprüche

1. Modulare Mehrwegpalette für den Transport und die Einlagerung von Waren, bestehend aus einer selbsttragenden Plattform (2) und einer tragenden, in der Höhe verstell-baren Vorrichtung, wobei Teile dieser verstellbaren Vorrichtung in der Art miteinander verbunden sind, dass deren Stellung in Relation zur Höhe der Platt-form in zwei Endpositionen immer gleich ist, diese verstellbare Vorrichtung an mindestens einer Stelle mit der selbsttragenden Plattform (2) verbunden ist,
wobei die obere Fläche der selbsttragenden Plattform (2) in beiden Endpositionen zur, durch die Teile der verstellbaren Vorrichtung gebildeten unteren Fläche, parallel ist, so dass die obere Fläche der selbsttragenden Plattform (2) stets zu einer ebenen Fläche, auf der die Mehrwegpalette steht, parallel ist,
**dadurch gekennzeichnet,**
**dass** die verstellbare Vorrichtung aus drei an der Plattform drehbar gelagerten, tragenden Holmen (3, 3', 3") besteht.

2. Modulare Mehrwegpalette Anspruch 1,
**dadurch gekennzeichnet,**
**dass** die verstellbare Vorrichtung in den Endstellungen "hoch" und "tief" durch entsprechende Mittel gesichert und gegen Verstellung gehalten ist und dazu mit einer Zwangsverriegelung versehen ist.

## Claims

1. Modular reusable pallet for the transport and storage of goods, comprising a self-supporting platform (2) and a supporting, height-adjustable device, wherein parts of this adjustable device are connected to one another in such a way that their position in relation to the height of the platform is always the same in two end positions, and this adjustable device is connected to the self-supporting platform (2) at at least one point, wherein the upper surface of the self-supporting platform (2) in both end positions is parallel to the lower surface formed by the parts of the adjustable device, with the result that the upper surface of the self-supporting platform (2) is always parallel to a planar surface on which the reusable pallet stands, **characterized in that** the adjustable device comprises three supporting spars (3, 3', 3") rotatably mounted on the platform.

2. Modular reusable pallet according to Claim 1, **characterized in that** the adjustable device is secured in the "high" and "low" end positions by corresponding means and is held against adjustment and for this purpose is provided with a positive locking mechanism.

## Revendications

1. Palette réutilisable modulaire pour le transport et le stockage de marchandises, constituée d'une plate-forme autoportante (2) et d'un dispositif porteur réglable en hauteur, des parties de ce dispositif réglable étant connectées les unes aux autres de telle sorte que leur position par rapport à la hauteur de la plate-forme soit toujours identique dans deux positions d'extrémité, ce dispositif réglable étant connecté en au moins un endroit à la plate-forme autoportante (2), la surface supérieure de la plate-forme autoportante (2), dans les deux positions d'extrémité, étant parallèle à la surface inférieure formée par les parties du dispositif réglable, de telle sorte que la surface supérieure de la plate-forme autoportante (2) soit toujours parallèle à une surface plane sur laquelle repose la palette réutilisable,
**caractérisée en ce que**
le dispositif réglable se compose de trois longerons porteurs (3, 3', 3") montés de manière rotative sur la plate-forme.

2. Palette réutilisable modulaire selon la revendication 1, **caractérisée en ce que** le dispositif réglable est fixé dans les positions d'extrémité "haute" et "basse" par des moyens correspondants, et est maintenu pour empêcher son mouvement, et est à cet effet pourvu d'un verrouillage forcé.
